# EUROPEAN PATENT APPLICATION

(11) **EP 4 678 002 A1**
(43) Date of publication of application: **14.01.2026**
(21) Application number: 25188345.0
(22) Date of filing: 09.07.2025
(51) Int. Cl.: A01M 1/04, A01M 1/22

(54) **PEST CONTROL SYSTEM AND METHOD**

(30) Priority: 12.07.2024 JP 2024112381
(71) Applicant: NICHIA CORPORATION, Anan-shi, Tokushima 774-8601 (JP)
(72) Inventor: TSURUMOTO, Tomohiro, Anan-shi, Tokushima, 774-8601 (JP); FUJIKAWA, Yasuo, Anan-shi, Tokushima, 774-8601 (JP)
(74) Representative: Winter, Brandl - Partnerschaft mbB

(57) **Abstract**

A pest control system includes a plurality of first light sources configured to emit light with a first wavelength to a first region of a cultivation region in which crops are cultivated, to suppress damage to the crops caused by harmful insects, and one or more second light sources configured to emit light with a second wavelength to gather the harmful insects and beneficial insects in a second region that is a part of the cultivation region and smaller than the first region. The beneficial insects are for suppressing damage to the crops caused by the harmful insects.

## Description

### TECHNICAL FIELD

The present disclosure relates to a pest control system and a crop production method.

### BACKGROUND

Japanese Patent Publication No. 2011-72200 discloses a method for eliminating harmful insects by attracting insects that are natural enemies of the harmful insects (for example, phytoseiid mites that are natural enemies of spider mites that are harmful insects) using light.

### SUMMARY

Allowing the insects attracted by using an insect-attracting effect to eliminate the harmful insects is certainly effective, and is more environmentally friendly than applying agricultural chemicals.

On the other hand, the attracted insects tend to stay at a place where the insects are attracted to prey on harmful insects as long as sufficient harmful insects to be preyed upon are present at the place. However, when the number of the harmful insects decreases, the attracted insects move away from the place.

A pest control system that can keep insects (beneficial insects) for eliminating harmful insects for a long period of time is disclosed.

As an alternative, a pest control system that can stably maintain a harmful insect elimination effect is disclosed.

As an alternative, a pest control system that reduces the number of beneficial insects to be released into a cultivation region to as small as possible is disclosed.

In the present specification, a pest control system in which a combination of the above-described pest control systems is also disclosed.

A pest control system disclosed in an embodiment includes a plurality of first light sources configured to emit light with a first wavelength to a first region of a cultivation region in which crops are cultivated, to suppress damage to the crops caused by harmful insects, and one or more second light sources configured to emit light with a second wavelength to gather the harmful insects and beneficial insects in a second region that is a part of the cultivation region and smaller than the first region. The beneficial insects are for suppressing damage to the crops caused by the harmful insects.

A pest control system disclosed in an embodiment includes a first light source configured to emit light with a first wavelength to a first region of a cultivation region in which crops are cultivated, a second light source configured to emit light with a second wavelength to a second region of the cultivation region in which crops are cultivated, the second region being smaller than the first region, and a predetermined number or more of beneficial insects. The pest control system is configured to continuously keep the predetermined number or more of beneficial insects by, controlling the first light source and the second light source to adjust the light with the first wavelength and the light with the second wavelength, allowing the predetermined number or more of beneficial insects in the second region to eliminate a certain number of harmful insects among harmful insects entering or generated in the cultivation region within a predetermined period, and adjusting a number of remaining harmful insects to be eliminated by the light with the first wavelength.

A crop production method disclosed in an embodiment includes releasing a predetermined number of beneficial insects into a cultivation region in which crops are cultivated; emitting light with a first wavelength to a first region for a predetermined time, the first region being a part or all of the cultivation region in which crops are cultivated; and emitting light with a second wavelength for a predetermined time to gather, in a second region smaller than the first region, the predetermined number of beneficial insects released into the cultivation region and harmful insects existing outside the second region.

The disclosed embodiments can achieve a pest control system that can keep insects (beneficial insects) that eliminate harmful insects for a long period of time.

### BRIEF DESCRIPTION OF DRAWINGS

FIG. 1 is a system configuration diagram of an example of a pest control system according to an embodiment as viewed from above.
FIG. 2 is a system configuration diagram of an example of the pest control system according to the embodiment as viewed from the lateral side.
FIG. 3 is a schematic diagram of a first light source according to the embodiment.
FIG. 4 is a schematic diagram of a first light source and a second light source according to the embodiment.
FIG. 5 is a system configuration diagram illustrating another example (Modified Example 1) of the pest control system according to the embodiment.
FIG. 6 is a system configuration diagram illustrating another example (Modified Example 2) of the pest control system according to the embodiment.
FIG. 7 is a system configuration diagram illustrating another example (Modified Example 3) of the pest control system according to the embodiment.
FIG. 8 is a system configuration diagram illustrating another example (Modified Example 4) of the pest control system according to the embodiment.

### DETAILED DESCRIPTIONS

An embodiment for implementing the present invention is described below. A specific embodiment for implementing the present invention is further described with reference to the drawings. An embodiment for implementing the present invention is not limited to the specific embodiment. That is, the embodiment illustrated by the drawings is not the only form in which the present invention is implemented. Sizes and positional relationships of members illustrated in each of the drawings may sometimes be exaggerated to facilitate understanding.

### Embodiment

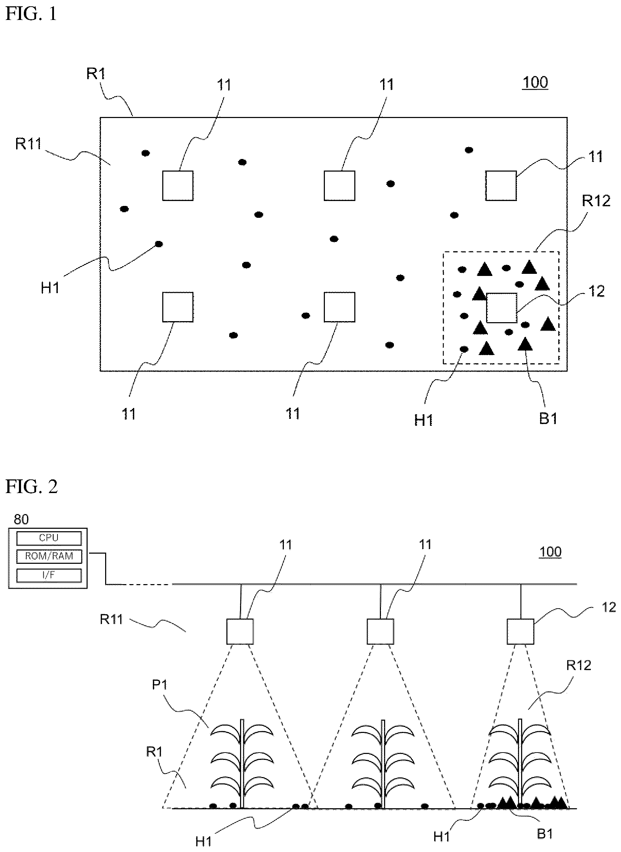

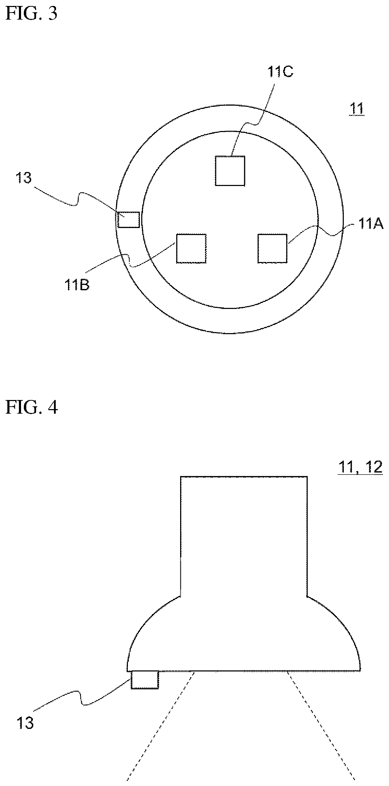

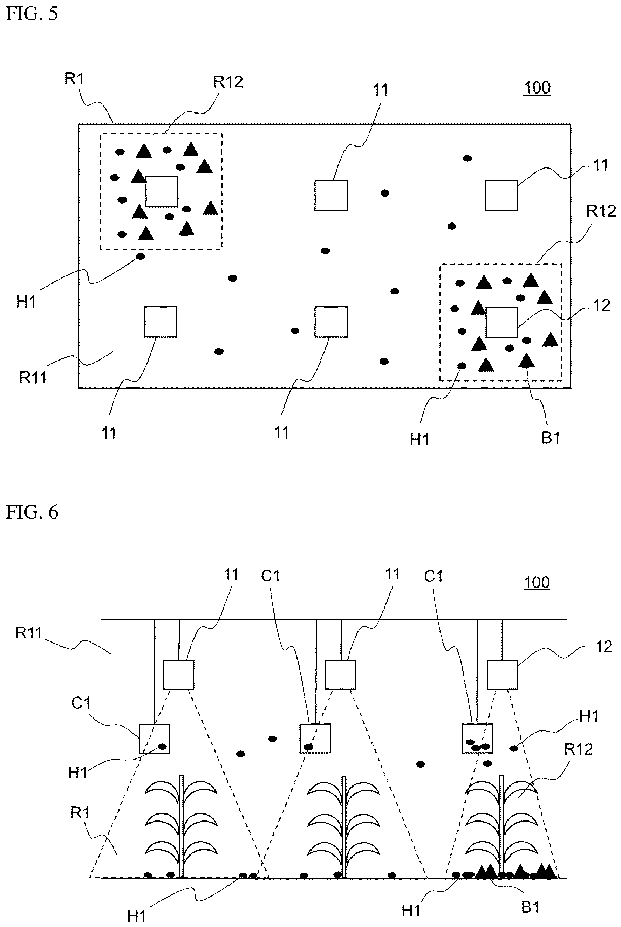

A pest control system 100 according to an embodiment is described. FIGS. 1 to 8 are diagrams for illustrating an exemplary embodiment of the pest control system 100. FIG. 1 is a schematic diagram of a system configuration of the pest control system 100 as viewed from above. FIG. 2 is a schematic diagram of the system configuration of the pest control system 100 as viewed from the lateral side. FIG. 3 is a schematic diagram of a first light source 11 as viewed from a light irradiation surface side. FIG. 4 is a schematic diagram of the first light source 11 and a second light source 12 as viewed from the lateral side. FIG. 5 is a schematic diagram of a system configuration illustrating another example (Modified Example 1) of the pest control system 100.

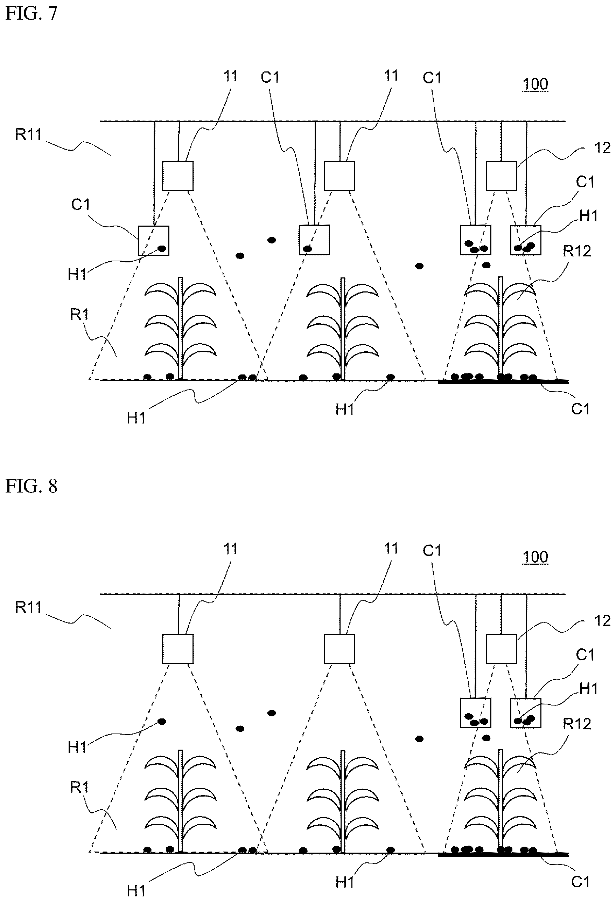

FIG. 6 is a schematic diagram of a system configuration illustrating another example (Modified Example 2) of the pest control system 100. FIG. 7 is a schematic diagram of a system configuration illustrating another example (Modified Example 3) of the pest control system 100. FIG. 8 is a schematic diagram of a system configuration illustrating another example (Modified Example 4) of the pest control system 100. FIG. 5 is a schematic diagram as viewed from above, and FIGS. 6 to 8 are schematic diagrams as viewed from the lateral side.

The pest control system 100 includes a plurality of components. The plurality of components included in the pest control system 100 include one or more first light sources 11 and one or more second light sources 12. In addition, the plurality of components include a region R1 (cultivation region) in which crops P1 are cultivated. In addition, beneficial insects B1 that work as biological control agents against harmful insects H1 exist in the region R1.

Examples of the relationship between the harmful insects H1 and the beneficial insects B1 include, but are not limited to, spider mites ("hadani" in Japanese) and phytoseiid mites ("kaburidani" in Japanese), and thrips and phytoseiid mites. It is conceivable that, depending on the crops P1 to be grown, the kinds of harmful insects H1 gathering on the crops P1 may be different, and thus the kinds of beneficial insects B1 that work as biological control agents against the harmful insects H1 may also be different. Note that there are many foreign language names corresponding to the Japanese term "hadani" mentioned here. Therefore, as long as it can be considered as "hadani" that corresponds to a pest in light of the invention's content, the harmful insects are not limited to "spider mites" exemplified here, and the fact that it may have different foreign language names does not serve as a reason to limit the invention. The same is true for the Japanese term "kaburidani."

The pest control system 100 performs a first suppression method for suppressing damage caused by the harmful insects H1 by using light, and a second suppression method for suppressing the damage caused by the harmful insects H1 by using the beneficial insects B1. In addition, the first suppression method and the second suppression method are effectively used in the region R1, thereby achieving the pest control system 100 that can keep the beneficial insects B1 in the region R1 for a long period of time while suppressing the damage caused by the harmful insects H1.

Components included in the pest control system 100 are described.

### First Light Source 11

The first light source 11 emits light with a first wavelength that is a peak wavelength.

The first wavelength is a wavelength of light that can suppress damage to the crops P1 caused by the harmful insects H1. The light with the first wavelength is light for suppressing damage to the crops P1 caused by the harmful insects H1. For example, the light with the first wavelength is light that can eliminate the harmful insects H1 by being emitted to the harmful insects H1 with a predetermined amount or more.

As a specific example, the first wavelength can be in a range from 265 nm to 315 nm. The first light source 11 does not have to only emit the light with the first wavelength, but may also include light with a wavelength less than 265 nm and light with a wavelength exceeding 315 nm. Preferably, all of lights emitted from the first light sources 11 are substantially in a wavelength range from 265 nm to 315 nm.

For example, the first wavelength can be in a range from 300 nm to 315 nm. As the first wavelength is shorter, there is more concern about the crops P1 to be damaged by the light with the first wavelength.

In addition, for example, the first wavelength can be in a range from 265 nm to 280 nm. In the case in which as the first wavelength is shorter, the effect of eliminating the harmful insects H1 (insecticidal capacity) increases, and thus, selection of light with a shorter wavelength is also considered.

For example, the first light source 11 may include a first light-emitting element 11A that emits light with the first wavelength in a range from 300 nm to 315 nm, and a second light-emitting element 11B that emits light with the first wavelength in a range from 265 nm to 280 nm. The first light sources 11 can be controlled depending on the state of the crops P1 such that in the first light-emitting element 11A and the second light-emitting element 11B, only the first light-emitting element 11A emits light or only the second light-emitting element 11B emits light or both the first light-emitting element 11A and the second light-emitting element 11B emit light.

For example, the first light source 11 may further include a third light-emitting element 11C that emits light for lighting in addition to the first light-emitting element 11A and/or the second light-emitting element 11B. The light for lighting is typically white light, but does not have to be limited to white light. The white light is, for example, warm-white light like incandescent light or light having a higher color temperature than the incandescent light (neutral white, daylight color, daylight white or the like). For example, light-emitting diodes can be employed as these light-emitting elements.

When the first light source 11 includes the third light-emitting element 11C, a preferable form of control does not have to allow the third light-emitting element 11C to emit light at the same time as the first light-emitting element 11A and/or the second light-emitting element 11B. This is because the light for lighting may reduce the effect of the first suppression method performed using the first light-emitting element 11A and/or the second light-emitting element 11B.

### Second Light Source 12

The second light source 12 emits light with a second wavelength that is a peak wavelength. The second wavelength is a wavelength of light having an effect of attracting and keeping the harmful insects H1 and the beneficial insects B1. The light with the second wavelength is light for gathering the harmful insects H1 and the beneficial insects B1. The light with the second wavelength is emitted from the second light sources 12, and thus the harmful insects H1 and the beneficial insects B1 gather in the irradiation range of the light.

As a specific example, the second wavelength can be in a range from 316 nm to 560 nm. Note that the second light sources 12 do not have to only emit the light with the second wavelength, but may also include light with a wavelength less than 316 nm and light with a wavelength exceeding 560 nm. Preferably, all of lights emitted from the second light sources 12 are substantially in a wavelength range from 316 nm to 560 nm.

In addition, for example, the second wavelength can be in a range from 316 nm to 340 nm. In order not to promote spore formation of filamentous fungi, it is preferable that the lights emitted from the second light sources 12 do not substantially include light with a wavelength exceeding 340 nm. Light with a wavelength in a range from 340 nm to 500 nm can promote the formation of filamentous fungi.

In addition, for example, the second wavelength can be in a range from 340 nm to 560 nm. In particular, to enhance the effect of attracting the harmful insects H1 and the beneficial insects B1 (insect-attracting effect), the second wavelength is preferably set to 365 nm.

### Cultivation Region R1

The cultivation region R1 is a region in which the crops P1 are cultivated. The cultivation region R1 can be typically assumed to be a region such as a plastic greenhouse, but is not limited to the plastic greenhouse. The cultivation region R1 may also be a region in which a plurality of vinyl greenhouses are located together. A region such as a plastic greenhouse is not sealed to prevent insects from entering the greenhouse, and insects coming from the outside of the greenhouse can move into the greenhouse. That is, the cultivation region R1 is a region in which the harmful insects H1 and the beneficial insects B1 can freely enter and exit.

For example, a region defined by one plastic greenhouse can be as small as 20 m² and as large as 2000 m². The cultivation region R1 may be larger than 2000 m².

The cultivation region R1 includes a first region R11 irradiated with light emitted from one or a plurality of first light sources 11. In addition, the cultivation region R1 includes a second region R12 irradiated with light emitted from one or a plurality of second light sources 12. The first region R11 is a part or all of the cultivation region R1. The second region R12 is a region smaller than the first region R11. The second region R12 may be a part of the first region R11. Alternatively, the second region R12 may be a region different from the first region R11 in the cultivation region R1.

### Beneficial Insects B1

The beneficial insects B1 are organisms that work as biological control agents for suppressing damage to the crops P1 caused by the harmful insects H1. The beneficial insects B1 are insects that eliminate the harmful insects H1. The beneficial insects B1, for example, prey on the harmful insects H1. The harmful insects H1 may be eliminated by, for example, expelling the harmful insects H1 from a certain region without preying on the harmful insects H1.

The pest control system 100 is described below.

### Pest Control System 100

In the pest control system 100, one or a plurality of first light sources 11 are installed to emit light with the first wavelength to the first region R11. The one or the plurality of first light sources 11 emit light with the first wavelength from above the crops P1 toward the first region R11 in which the crops P1 are cultivated.

In addition, one or a plurality of second light sources 12 are installed to emit light with the second wavelength to the second region R12. The one or the plurality of second light sources 12 emit light with the second wavelength from above the crops P1 toward the second region R12 in which the crops P1 are cultivated. A region irradiated with the light with the second wavelength emitted by the one or the plurality of second light sources 12 is smaller than a region irradiated with the light with the first wavelength emitted by the one or the plurality of first light sources 11.

The effective irradiation range of light emitted from one of the first light sources 11 is, for example, about 4 m² to 20 m². The term "effective irradiation range" described herein refers to a range in which the effect of eliminating the harmful insects H1 is substantially obtained. In this sense, because the range may be changed depending on the growth state of the crops P1, or the like, the effective irradiation range is set in terms of "about x m² to y m²".

The effective irradiation range of light emitted from one of the second light sources 12 is, for example, about 1 m² to 10 m². The term "effective irradiation range" described herein refers to a range in which the harmful insects H1 and the beneficial insects B1 gather. In this sense, because the range may be changed depending on the growth state of the crops P1, or the like, the effective irradiation range is set in terms of "about x m² to y m²".

In the pest control system 100, the number of first light sources 11 installed may be greater than the number of second light sources 12 installed. For example, the number of second light sources 12 installed may be one in one plastic greenhouse (size of the cultivation region is 20 m² to 2000 m²). The second light source 12 is not installed in the vicinity of an entrance of the plastic greenhouse. When the second wavelength is in a range from 316 nm to 340 nm, the second light sources 12 are not disposed near the entrance/exit of the cultivation region R1 for a person who works in the cultivation region R1, and are preferably installed away from the entrance/exit in consideration of an influence on the human body.

The size (area) of the first region R11 is twice or more the size (area) of the second region R12. Alternatively, the size (area) of the first region R11 is 20 times or more the size (area) of the second region R12. Alternatively, the size (area) of the first region R11 is 200 times or more the size (area) of the second region R12. Almost all of the cultivation region R1 in which the crops P1 are cultivated can be set as the first region R11.

The harmful insects H1 existing in the first region R11 can be eliminated by emitting the light with the first wavelength from the first light sources 11. However, all the harmful insects H1, including harmful insects H1 that are hidden on the back of the leaves of the crops P1, in regions shaded by the crops P1, or hidden in soil, cannot be eliminated.

In the pest control system 100, not all the harmful insects H1 are eliminated by the light with the first wavelength emitted from the one or the plurality of first light sources 11, and a balance is maintained so that a predetermined number of harmful insects H1 exist in the cultivation region R1. One method to maintain the balance is, for example, to adjust the size of the first region R11 with respect to the cultivation region R1, that is, the range in which the light with the first wavelength is emitted. For example, another method is to adjust the length of time to emit the light with the first wavelength.

In the pest control system 100, the light with the first wavelength from the first light source 11 and the light with the second wavelength from the second light source 12 are emitted at night. Because sunlight is emitted during the daytime, light irradiation by the pest control system 100 at night is more effective. The light with the first wavelength or the light with the second wavelength may be emitted during the daytime.

In the pest control system 100, the light with the first wavelength from the first light source 11 is preferably emitted at night in a time period in which a person does not work (for example, a midnight zone from 0 am to 3 am). Because the light with the first wavelength is ultraviolet light, the light is preferably emitted in a time period in which no person exists, in consideration of its influence on the human body.

The first light source 11 may include a sensor 13 such as a monitor sensor. The second light source 12 may include the sensor 13 such as a monitor sensor. The sensing range of the sensor 13 provided in the first light source 11 or the second light source 12 is included in the effective irradiation range of the light emitted from the first light source 11 or the second light source 12. Alternatively, the sensing range covers the effective irradiation range. A monitor sensor is provided as the sensor 13, and thus the first light source 11 can stop emitting light when a person exists in the effective irradiation range of the light emitted by the first light source 11.

When a light irradiation surface for the first light source 11 is located at a height in a range from 1.0 m to 2.0 m from the cultivation region R1, ensuring that the sensing range of the sensor 13 is twice the irradiation range of light emitted by the first light source 11 is preferable. Because a part of the light directed to the cultivation region R1 from the first light sources 11 is reflected off the cultivation region R1, when the reflected light reaches the height at which the first light source 11 is installed, the light from the first light source 11 spreads to twice the irradiation range in the cultivation region R1. In addition, because the face of a worker can be assumed to be located at a height in a range from 1.0 m to 2.0 m, the safety of the human body can be further considered by ensuring the sensing range is twice the irradiation range. This is particularly effective in a case in which the cultivation region R1 is provided with a reflection sheet.

In the first light source 11 or the second light source 12, the sensor 13 is disposed at a position not to be irradiated by the light with the first wavelength or the light with the second wavelength. For example, the sensor 13 can be disposed outside a housing part of the light source. The sensor 13 can be disposed in an outer edge or its vicinity of the light irradiation surface on the light irradiation surface side to which the light with the first wavelength or the light with the second wavelength is emitted. With such an arrangement, deterioration of the sensor 13 due to the light with the first wavelength and the light with the second wavelength can be suppressed.

In the pest control system 100, the light with the first wavelength from the first light source 11 is emitted for at least one minute. The light may be continuously emitted from the first light source 11, or may be emitted at intervals.

During the time period when the first light source 11 emits the light with the first wavelength, the second light source 12 does not have to emit the light with the second wavelength. This is because the movement of the harmful insects H1 in the first region R11 is suppressed while the light with the first wavelength is emitted to the first region R11. In other words, in the pest control system 100, preferably the first light source 11 does not emit the light with the first wavelength while the second light source 12 emits the light with the second wavelength to gather the harmful insects H1 and the beneficial insects B1 in the second region R12.

In the pest control system 100, there is a time period during which the light with the second wavelength is emitted by the second light source 12, and the light with the first wavelength is not emitted by the first light source 11. During this time period, the harmful insects H1 in the cultivation region R1 are gathered in the second region R12. On the other hand, it is not always necessary to control the light with the second wavelength such that the light with the second wavelength is not emitted by the second light source 12 during the time for which the light with the first wavelength is emitted by the first light source 11.

The illuminance and irradiation time of the light with the first wavelength emitted from the first light source 11 need to be appropriately adjusted not only in consideration of damage to the crops P1 but also in such a manner that the harmful insects H1 are not excessively eliminated by the light with the first wavelength. For example, light with an illuminance in a range from 5 µW/cm² to 25 µW/cm² may be emitted for a time in a range from one hour to five hours.

For example, by using one or a plurality of first light sources 11 and one or a plurality of second light sources 12 whose second wavelengths are in a range from 316 nm to 340 nm, between sunset and sunrise, the one or the plurality of second light sources 12 are driven to emit light with the second wavelength for one hour or more, and the one or the plurality of first light sources 11 are driven to emit light with the first wavelength for one hour or more. The time during which the light with the second wavelength is emitted is longer than the time during which the light with the first wavelength is emitted.

The one or the plurality of second light sources 12 are driven at a time between sunset and sunrise and earlier than a time when the one or the plurality of first light sources 11 is driven. The one or the plurality of first light sources 11 start being driven one hour or more after the one or the plurality of second light sources 12 start being driven. Thus, the harmful insects H1 can be first gathered in the second region R12, and the food for the beneficial insects B1 can be ensured.

In addition, for example, by using one or a plurality of first light sources 11 and one or a plurality of second light sources 12 whose second wavelengths are in a range from 340 nm to 560 nm, between sunset and sunrise, the one or the plurality of second light sources 12 are driven to emit light with the second wavelength for one hour or more, and the one or the plurality of first light sources 11 are driven to emit light with the first wavelength for one hour or more. In addition, the light with the second wavelength is not emitted during the time period in which the light with the first wavelength is emitted.

The one or the plurality of second light sources 12 are driven at a time between sunset and sunrise and earlier than a time when the one or the plurality of first light sources 11 is driven . In addition, the light of the second light source 12 is not emitted for three hours or more after the emission of the light with the first wavelength is terminated. For example, because light with a wavelength of 365 nm may reduce the sterilization effect of the light with the first wavelength, the light with the second wavelength is neither emitted during the emission of the light with the first wavelength nor emitted for three hours after the termination of the emission.

In the pest control system 100, a predetermined number of beneficial insects B1 are released into the region R1 in accordance with the timing of generation of the harmful insects H1. The number of beneficial insects B1 to be released into the region R1 is determined in accordance with the area of the region R1. A rough indication of how many beneficial insects B1 should be present to sufficiently eliminate the harmful insects H1 is given by a trader who handles beneficial insects for the elimination of harmful insects. For example, the following indications are given per 100 m²: 600 Phytoseiulus persimilis, 200 to 600 Neoseiulus californicus, 2500 to 5000 Amblyseius swirskii, 100 to 300 Orius strigicollis, 100 to 200 Aphidius colemani, and 1000 to 1300 larvae of Harmonia axyridis.

Also in the pest control system 100, the number of beneficial insects B1 to be released into the cultivation region R1 is adjusted according to the size of the cultivation region R1 with reference to the number of beneficial insects given as the indications. In other words, the pest control system 100 includes a predetermined number of beneficial insects B1 according to the size of the cultivation region R1. In the pest control system 100, the light with the first wavelength eliminates the harmful insects H1, and thus the pest control system 100 needs to keep a balance between the beneficial insects B1 and the harmful insects H1 in consideration of this point.

In the pest control system 100, a part of the harmful insects H1 continuously entering the cultivation region R1 from the outside of the cultivation region R1 is eliminated by the light with the first wavelength from the first light sources 11 before reaching the second region R12. The remaining harmful insects H1 are gathered in the second region R12. In the pest control system 100, the light with the second wavelength is emitted to the second region R12, so that a predetermined number or more of harmful insects H1 entering the cultivation region R1 from the outside of the cultivation region R1 within a predetermined period can be gathered in the second region R12. The number of harmful insects H1 gathering in the second region R12 is larger than the number of harmful insects H1 existing in a portion of the first region R11 having the same area as the second region R12.

Subsequently, an adjusted number of beneficial insects B1 are gathered in the second region R12 such that the harmful insects H1 are not depleted in the second region R12. Assuming that a predetermined number of harmful insects H1 enter the cultivation region R1 from the outside of the cultivation region R1 and reach the second region R12 in a predetermined period, and a predetermined number of harmful insects H1 are born in the cultivation region R1 and reach the second region R12 in a predetermined period, it is only needed that a necessary and sufficient number of beneficial insects B1 that can eliminate these harmful insects H1 are gathered in the second region R12.

That is, the number of beneficial insects B1 to be released into the cultivation region R1 can be determined such that a certain number or more of beneficial insects B1 among a predetermined number of beneficial insects B1 released into the cultivation region R1 are continuously gathered in the second region R12. The number of beneficial insects B1 can be determined according to an approximate number of harmful insects H1 entering the cultivation region R1 from the outside of the cultivation region R1 within a predetermined period, and an approximate number of harmful insects H1 born in the cultivation region R1 within the same period. Because it is difficult to confirm that all of the beneficial insects B1 released into the cultivation region R1 stay in the cultivation region R1, the term "a certain number or more of beneficial insects B1" is used.

When the harmful insects H1 in the cultivation region R1 are intended to be eliminated only by the first suppression method, the harmful insects H1 hidden on the back of the leaves of the crops P1 or the harmful insects H1 in a region that is shady and not sufficiently irradiated with the light with the first wavelength are not able to be eliminated. In contrast, when the harmful insects H1 in the cultivation region R1 are intended to be eliminated only by the second suppression method, a sufficient number of harmful insects H1 existing in the cultivation region R1 are also eliminated by the beneficial insects B1 and thus decreases with the lapse of time. Accordingly, the number of beneficial insects B1 also decreases. Therefore, when the number of harmful insects H1 increases thereafter, the beneficial insects B1 need to be released again and need to be replenished frequently.

On the other hand, the pest control system 100 allows the beneficial insects B1 released once to stay in the cultivation region R1 for a long period of time by gathering the harmful insects H1 from the cultivation region R1 larger than the second region R12 or from the outside of the cultivation region R1, while setting the main activity range of the beneficial insects B1 to the second region R12 that is a part of the cultivation region R1 by using the insect-attracting effect of the light with the second wavelength. In addition, the harmful insects are eliminated with the light with the first wavelength in the first region R11 larger than the second region R12, and thus the harmful insects H1 can be suppressed from freely acting in the cultivation region R1 other than the second region R12 and damaging the crops P1. Because the harmful insects H1 not having been eliminated by the light with the first wavelength are also eliminated by the beneficial insects B1 by being attracted to the second region R12, damage to the crops P1 caused by the harmful insects in the first region R11 can be suppressed.

Utilizing the first suppression method and the second suppression method in combination, while keeping the balance in this way allows the beneficial insects B1 released once to stay in the cultivation region R1 for a long period of time. The light with the first wavelength, the light with the second wavelength, and the beneficial insects B1 are appropriately adjusted, and thus the pest control system 100 that continuously keeps a predetermined number of beneficial insects B1 can be achieved.

Specifically, as shown in FIG. 2, the first light sources 11 and the second light sources 12 are connected to a controller 80. The light with the first wavelength emitted to the first region R11 and the light with the second wavelength emitted to the second region R12 are controlled by the controller 80, so that a certain number of harmful insects H1 among the harmful insects H1 entering or generated in the cultivation region R1 within a predetermined period are eliminated (preyed upon) by a predetermined number of beneficial insects B1 in the second region R12, and the light with the first wavelength, the light with the second wavelength, and the beneficial insects B1 are adjusted such that some or all of the remaining harmful insects H1 are eliminated by the light with the first wavelength. The controller 80 includes conventional components such as a CPU, an input interface circuit, an output interface circuit, and storage devices such as a ROM and a RAM.

The control of the light with the first wavelength includes factors such as an irradiation range, an irradiation amount, and an irradiation time of the light with the first wavelength. The control of the light with the second wavelength includes factors such as an irradiation range, an irradiation amount, and an irradiation time of the light with the second wavelength.

The pest control system 100 performs a step of releasing a predetermined number of beneficial insects B1 into the cultivation region R1, a step of emitting the light with the first wavelength to the first region R11 for a predetermined time, and a step of emitting the light with the second wavelength for a predetermined time to gather, in the second region R12, the predetermined number of beneficial insects B1 released into the cultivation region R1 and harmful insects H1 existing outside the second region R12. Thus, the crops P1 can be produced without being damaged by the harmful insects H1.

Continuously keeping a predetermined number of beneficial insects B1 can suppress frequent repetition of the pest elimination work in which after the beneficial insects B1 disappear due to depletion of the harmful insects H1 in the cultivation region R1, the beneficial insects B1 are released again due to entrance of the harmful insects H1 into the cultivation region R1.

Both the harmful insects H1 and the beneficial insects B1 are organisms and how the harmful insects H1 and the beneficial insects B1 move is not able to be completely controlled. Therefore, the number of the harmful insects H1 and the number of the beneficial insects B1 existing in the cultivation region R1 are not accurately ascertainable. In addition, because the number of harmful insects H1 entering from the outside of the cultivation region R1 is not fixed, a certain degree of variation is naturally expected to be observed.

In view of this, a small number of beneficial insects B1 can be periodically released into the cultivation region R1 to replenish the beneficial insects B1. In that sense, the number of beneficial insects B1 to be released for pest elimination can be reduced instead of, or together with, the suppression of frequent repetition of the pest elimination work. The term "small number of beneficial insects B1" described herein is a relative expression that, on the assumption that at least some of the predetermined number of beneficial insects B1 having been already released stay in the cultivation region R1, beneficial insects B1 are released in the cultivation region R1 after subtracting the at least some of the predetermined number of beneficial insects B1 having already been released.

The pest control system 100 can keep a predetermined number of beneficial insects B1 for a long period of time. For example, in the pest control system 100, a predetermined number of beneficial insects B1 stay in the cultivation region R1 for at least 20 days or more. The term "predetermined number" described herein is a number equal to or less than the number of beneficial insects B1 released into the cultivation region R1. Preferably, the predetermined number of beneficial insects B1 stay in the cultivation region R1 for at least 30 days or more.

For example, when strawberries are cultivated as the crops P1, the period during which the harmful insects H1 are generated is about April to November in Japan, and measures against harmful insects are required for eight months. In this case, it is ideal to keep a predetermined number of beneficial insects B1 for eight months. The pest control system 100 can keep the predetermined number of beneficial insects B1 for eight months by appropriately controlling the light with the first wavelength, the light with the second wavelength, and the beneficial insects B1. The term "keep" described herein may include a case in which beneficial insects B1 born from beneficial insects B1 stay.

In the pest control system 100, the area of the second region R12 is preferably reduced to as small as possible. This is because the second region R12 is considered to be a region in which the crops P1 are more likely to be damaged by the harmful insects H1 than the first region R11 as long as the second region R12 is a region in which the harmful insects H1 gather.

In addition, the position of the second region R12 may be temporally changed such that damage to the crops P1 caused by harmful insects is not concentrated only on a specific portion of the cultivation region R1. For example, the position of the second region R12 in the cultivation region R1 may be changed every predetermined period (for example, every other month). The position of the second region R12 can be changed by changing the installation position of the second light sources 12.

In addition, the position of the second region R12 may be determined in consideration of the harvest time of the crops P1. A region in which the crops P1 to be harvested in the near future are cultivated can be used not as the second region R12, so that the yield can be increased.

It is also conceivable that even though any damage caused by harmful insects does not appear on the crops P1 themselves at the time of harvest, when harmful insects are found at the time of wrapping or packaging the harvested crops P1, their shipment may be restricted. It is therefore conceivable that, for example, from one week before the scheduled harvest time, a scheduled harvest region may be used not as the second region R12, and another region may be used as the second region R12. In this case, not only the scheduled harvest region but also a region near the scheduled harvest region may be used not as the second region 12, and another region may be used as the second region R12.

The second region R12 may also be divided into a plurality of regions (see FIG. 5). When the cultivation region R1 is large, the harmful insects H1 are easily gathered to the nearest attracting area by dispersing areas for attracting the harmful insects H1 and the beneficial insects B1.

The pest control system 100 may also include other components. For example, as illustrated in FIG. 6, insect traps C1 for capturing the harmful insects H1 may be installed. The insect trap C1 can include, for example, an attracting agent (bait or the like) for attracting the harmful insects H1, and a capturing material (adhesive tape or the like) for capturing the attracted harmful insects H1. In addition, for example, the insect trap C1 may be configured to suck and capture approaching insects into a bag using a fan motor. For another example, the insect trap C1 may be provided with a portion through which an electric current flows, and be configured to apply an electric shock to insects coming into contact with this portion so that the insects are not movable and are captured. The insect trap C1 can also be suspended in the air to capture the harmful insects H1 flying through the air or can be installed in the cultivation region R1 or near the cultivation region R1. Thus, the number of beneficial insects B1 released into the cultivation region R1 can be reduced.

As illustrated in FIGS. 7 and 8, the pest control system 100 may also suppress damage to the crops P1 caused by the harmful insects H1 by using the insect traps to capture the harmful insects H1, instead of the elimination of the harmful insects H1 by the beneficial insects B1. At this time, the insect traps C1 may be installed focusing on an area (second region R12) in which the harmful insects H1 are attracted and above (immediately above) this area. Instead of intensively gathering the beneficial insects B1, the insect traps C1 are intensively installed to effectively eliminate the harmful insects H1.

In the pest control system 100, the number of insect traps C1 installed per unit area in the second region R12 may be greater than the number of insect traps C1 installed per unit area in the first region R11. The number of insect traps C1 installed in the second region R12 may be greater than the number of insect traps C1 installed in the first region R11. Regardless of whether the pest control system 100 includes the beneficial insects B1, the insect traps C1 can be installed in this way in view of the relationship between the first region R11 and the second region R12.

In this case, the light with the second wavelength from the second light sources 12 is used for gathering the harmful insects H1 in the second region R12. The pest control system 100 includes at least the insect trap C1 installed in the second region and a region immediately above the second region. In the pest control not requiring beneficial insects B1, the pest elimination effect is not affected by an increase or decrease in the number of beneficial insects B1 existing in the cultivation region R1, thereby achieving the pest control system 100 that can stably maintain the pest elimination effect.

Conceivably, at the time of shipment of the crops P1 (also including shipment to foreign countries), the presence of even the beneficial insects B1 itself may be avoided. Thus, constructing the pest control system 100 in which the number of beneficial insects B1 to be released into the cultivation region R1 is reduced to as small as possible may also be beneficial to cultivators.

In the pest control system 100, when the number of beneficial insects B1 to be released into the cultivation region R1 is reduced, reducing the area of the second region R12 for gathering the beneficial insects B1 can be considered. When the area of the second region R12 is reduced, a region in which insects are gathered is reduced relative to the cultivation region R1, so that the yield of the crops P1 can be increased.

In the pest control system 100, the insect trap C1 may be installed only in the second region and a region immediately above the second region (which may include the vicinity of these regions). In this case, the insect trap C1 does not have to be installed in the first region R1 or a region immediately above the first region R1. Reducing the number of insect traps C1 to be installed is not only economical, but also leads to the construction of a system that preferably does not interfere with sunlight reaching the crops P1.

Although each embodiment according to the present disclosure has been described above, the pest control system according to the present disclosure is not strictly limited to the pest control system of the embodiments.

## Claims

1. A pest control system comprising:
a plurality of first light sources configured to emit light with a first wavelength to a first region of a cultivation region in which crops are cultivated, to suppress damage to the crops caused by harmful insects; and
one or more second light sources configured to emit light with a second wavelength to gather the harmful insects and beneficial insects in a second region that is a part of the cultivation region and smaller than the first region, the beneficial insects being for suppressing damage to the crops caused by the harmful insects.

2. The pest control system according to claim 1, further comprising
a predetermined number of the beneficial insects according to a size of the cultivation region.

3. The pest control system according to claim 2, wherein
the one or more second light sources are configured to emit light with the second wavelength to gather a predetermined number or more of the harmful insects entering the cultivation region from an outside of the cultivation region within a predetermined period.

4. The pest control system according to any one of claims 1 to 3, wherein
the beneficial insects are insects that work as biological control agents against the harmful insects, and
the predetermined number of the beneficial insects to be released into the cultivation region is determined such that a certain number or more of the beneficial insects among the predetermined number of the beneficial insects having been released into the cultivation region are continuously gathered in the second region.

5. The pest control system according to any one of claims 1 to 4, wherein a region in which the light with the second wavelength is emitted by the one or more second light sources is smaller than a region in which the light with the first wavelength is emitted by the plurality of first light sources.

6. The pest control system according to any one of claims 1 to 5, wherein the first wavelength is a wavelength in a range from 265 nm to 315 nm, and the second wavelength is a wavelength in a range from 316 nm to 560 nm.

7. A pest control system comprising:
a first light source configured to emit light with a first wavelength to a first region of a cultivation region in which crops are cultivated;
a second light source configured to emit light with a second wavelength to a second region of the cultivation region in which crops are cultivated, the second region being smaller than the first region; and
a predetermined number or more of beneficial insects, wherein
the pest control system is configured to continuously keep the predetermined number or more of beneficial insects by,
controlling the first light source and the second light source
to adjust the light with the first wavelength and the
light with the second wavelength,
allowing the predetermined number or more of beneficial
insects in the second region to eliminate a certain number of harmful insects among harmful insects entering or generated in the cultivation region
within a predetermined period, and
adjusting a number of remaining harmful insects to be
eliminated by the light with the first wavelength.

8. The pest control system according to claim 7, wherein the first light source and the second light source are controlled so that the predetermined number of beneficial insects stay in the cultivation region for at least 20 days or more.

9. A crop production method comprising:
releasing a predetermined number of beneficial insects into a cultivation region in which crops are cultivated;
emitting light with a first wavelength to a first region for a predetermined time, the first region being a part or all of the cultivation region in which crops are cultivated; and
second region smaller than the first region, the predetermined number of beneficial insects released into the cultivation region and harmful insects existing outside the second region.

10. A pest control system comprising:
a plurality of first light sources configured to emit light with a first wavelength to a first region of a cultivation region in which crops are cultivated, to suppress damage to the crops caused by harmful insects; and
one or more second light sources configured to emit light with a second wavelength to gather the harmful insects in a second region that is a part of the cultivation region and smaller than the first region.

11. The pest control system according to claim 10, wherein
the one or more second light sources are configured to emit the light with the second wavelength that attract the harmful insects and beneficial insects to the second region, the beneficial insects being insects that had been released in the cultivation region to suppress damage to the crops caused by the harmful insects.

12. The pest control system according to claim 10 or 11, further comprising
an insect trap installed in the second region to capture the harmful insects.
